# EUROPÄISCHE PATENTSCHRIFT

(11) **EP 4 275 027 B1**
(45) Veröffentlichungstag und Bekanntmachung des Hinweises auf die Patenterteilung: **12.11.2025**
(21) Anmeldenummer: 21844779.5
(22) Anmeldetag: 30.12.2021
(51) Int. Cl.: G01M 3/22

(54) **FOLIENKAMMER MIT TRÄGERGASZUFUHR UND VERFAHREN**
FILM CHAMBER COMPRISING A CARRIER GAS SUPPLY, AND METHOD
CHAMBRE À FILM COMPRENANT UNE ALIMENTATION EN GAZ PORTEUR ET PROCÉDÉ

(30) Priorität: 07.01.2021 DE 102021100147
(43) Veröffentlichungstag der Anmeldung: 15.11.2023
(73) Patentinhaber: Inficon GmbH, 50968 Köln (DE)
(72) Erfinder: WETZIG, Daniel, 50968 Köln (DE); REISMANN, Maximilian, 50968 Köln (DE); GRENZ, Josef, 50968 Köln (DE); VAN TRIEST, Hendrik, 50968 Köln (DE)
(74) Vertreter: Dompatent Partnerschaft von Patent- und Rechtsanwälten mbB
(86) Internationale Anmeldenummer: PCT/EP2021/087829
(87) Internationale Veröffentlichungsnummer: WO 2022/148701

(56) Entgegenhaltungen:
- WO-A1-2016/087280
- US-A1- 2003 233 866
- US-B1- 6 955 076

## Beschreibung

Die Erfindung betrifft eine Folienkammer zur Dichtheitsprüfung eines ein Prüffluid (Prüfgas oder Prüfflüssigkeit) enthaltenden Prüflings.

Folienkammern werden als Prüfkammern zur Gasprüfung der Gasdichtheit eines Prüflings, wie zum Beispiel einer Lebensmittelverpackung, eingesetzt. Dabei wird der Prüfling mit einem Prüfgas befüllt und in die Folienkammer eingebracht. Die Folienkammer wird verschlossen und evakuiert. Aus dem Prüfling in die Folienkammer austretendes Prüfgas wird mit einem Gasdetektor detektiert. Alternativ zur Prüfgasdetektion wird der Totaldruckanstieg in der Folienkammer gemessen. Dadurch wird unabhängig von der Art des aus dem Prüfling austretenden Prüfgases eine Leckage im Prüfling erkannt.

Bei starren Prüfkammern ist es bekannt, einen kontinuierlichen Strom von einem Trägergas, das von dem Prüfgas verschieden ist, durch die Prüfkammer hindurchzuführen, um das aus dem Prüfling ausgetretene Prüfgas mit dem Trägergas einem Detektor zuzuführen.

Ein solches Trägergasverfahren ist beispielsweise in EP 1 522 838 B1 beschrieben.

Auch bei Prüfkammern mit flexiblen Wänden oder Wandbereichen, sogenannten Folienkammern, ist es bekannt, ein Trägergas zu verwenden, wie zum Beispiel in DE 10 214 224 799 A1 beschrieben.

Gerade bei Folienkammern mit flexiblen Prüfkammerwänden besteht eine Schwierigkeit darin, einen gleichmäßigen Trägergasfluss bei evakuierter Prüfkammer zu erzeugen, wenn sich die Wände der Folienkammer an den Prüfling angeschmiegt haben. Bei ungleichmäßigem Trägergasfluss verteilt über die Folienoberfläche ist das Leckratensignal abhängig von der Position des Prüflings bzw. des Lecks innerhalb der Folienkammer.

US 6,955,076 B1 offenbart eine Folienkammer zur Leckdetektion.

WO 2016/087280 A1 offenbart ein Verfahren zur Dichtheitsprüfung unter Verwendung eines Trägergases in einer Folienkammer.

US 2003/233866 A1 offenbart ein Verfahren zum Betreiben einer Folienkammer zur Leckdetektion.

Der Erfindung liegt die Aufgabe zugrunde, eine verbesserte Folienkammer zur Dichtheitsprüfung eines ein Prüffluid enthaltenden Prüflings nach dem Trägergasverfahren sowie ein entsprechendes Verfahren bereitzustellen.

Das erfindungsgemäße System wird definiert durch die Merkmale von Patentanspruch 1 und von Patentanspruch 2.

Die erfindungsgemäße Folienkammer weist einen mit einer Vakuumpumpe und einem Gasdetektor verbundenen Vakuumanschluss auf, durch den das Gas aus dem Inneren der Folienkammer abgesaugt wird. Die Folienkammer weist mindestens einen ein Folienkammervolumen begrenzenden flexiblen Wandbereich auf. Insbesondere kann mindestens eine Wand der Folienkammer vollständig flexibel ausgestaltet sein. Vorzugsweise sind sämtliche Folienkammerwände flexibel. Hierbei kann die Folienkammer von zwei gegeneinander gelegten flexiblen Folien gebildet werden. Ein den flexiblen Wandbereich außen umgebender Rahmen ist zum Verschließen des Folienkammervolumens vorgesehen. Der Rahmen kann die Folien einspannen und gegeneinander pressen. Insbesondere ist denkbar, dass jede Folienwand einen eigenen Rahmen hat, wobei die Rahmen der Folienwände gasdicht gegeneinander gepresst werden, um das Folienkammervolumen zu verschließen.

Die Besonderheit der Erfindung besteht darin, dass der Vakuumanschluss mittig in Bezug auf den Rahmen und von diesem außen umgeben angeordnet ist, während mindestens ein Gaseinlass zum Zuführen eines Trägergases in das Folienkammervolumen derart im Bereich des äußeren Rahmens angeordnet ist, dass das durch den Gaseinlass einströmende Trägergas das Folienkammervolumen von außen nach innen entlang des flexiblen Wandbereichs hin zu dem Vakuumanschluss durchströmt. Dadurch wird eine gleichmäßige Durchströmung des Folienkammervolumens im Bereich der flexiblen Wandbereiche ermöglicht. Während der Dichtheitsprüfung ist das Folienkammervolumen bei evakuierter Folienkammer gering und entlang der Oberflächen der flexiblen Wandbereiche verteilt.

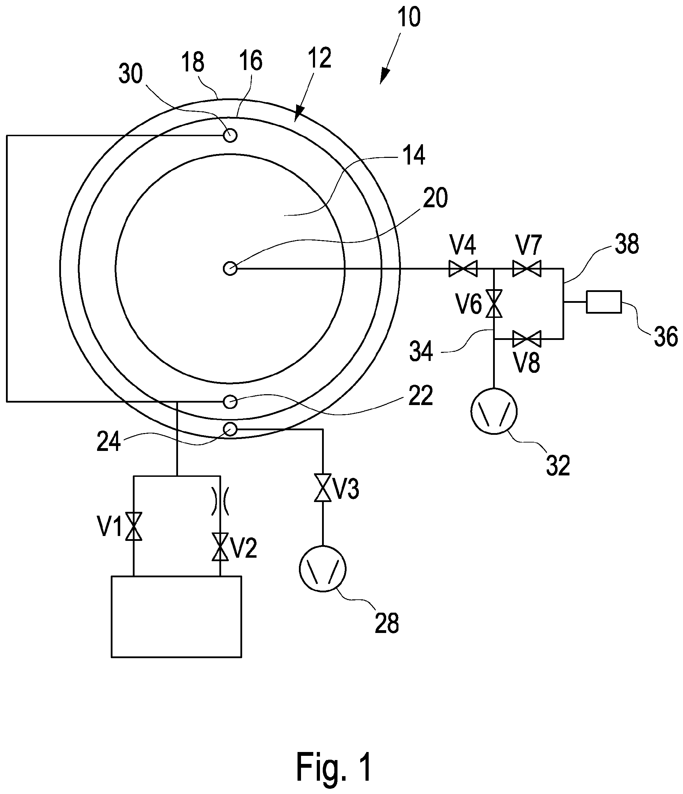

"Mittig in Bezug auf den Rahmen und von diesem außen umgeben" bedeutet dabei, dass der Vakuumanschluss in Draufsicht auf die Folienkammer, wie z.B. in Fig. 1, in allen Richtungen gleiche Abstände zu dem Rahmen aufweist (d.h. konzentrisch)

und der Rahmen den Vakuumanschluss ringförmig umgibt, ohne dass der Rahmen dabei kreisringförmig ausgebildet sein muss. Beispielsweise kann sich der Vakuumanschluss in Draufsicht auf die Folienkammer im Schwerpunkt des Rahmens oder in dessen Nähe befinden.

Nach einer zweiten Variante der Erfindung sind Vakuumanschluss und Gaseinlass im Sinne einer kinematischen Umkehr vertauscht, so dass der Gaseinlass mittig in Bezug auf den Rahmen und von diesem außen umgeben angeordnet ist, während mindestens ein Vakuumanschluss derart im Bereich des äußeren Rahmens angeordnet ist, dass das durch den Gaseinlass einströmende Trägergas das Folienkammervolumen von innen nach außen entlang des flexiblen Wandbereichs hin zu dem Vakuumanschluss oder den Vakuumanschlüssen durchströmt.

Bei dem Prüffluid kann es sich um ein Prüfgas und/oder um eine Prüfflüssigkeit handeln, also auch um eine Mischung aus einem Gas und einer Flüssigkeit.

Erfindungsgemäß ist es von Vorteil, wenn das Trägergas nach dem Einströmen in die Folienkammer durch den Gaseinlass bzw. vor dem Ausströmen aus der Folienkammer durch den Vakuumanschluss in Umfangsrichtung mit einem größeren Leitwert strömt, als in Radialrichtung zu dem Vakuumanschluss gemäß dem Leitwert in Radialrichtung. Dadurch wird gemäß der ersten Variante der Erfindung ermöglicht, dass sich das Gas nach dem Einströmen in die Folienkammer zunächst in Umfangsrichtung außen entlang des äußeren Randes der Folienkammerwände verteilt, bevor das Gas zwischen den Folienkammerwänden radial von außen nach innen in Richtung auf den Vakuumanschluss strömt. Gemäß der zweiten Variante der Erfindung verteilt sich das Gas vor dem Ausströmen aus der Folienkammer in Umfangsrichtung außen entlang des äußeren Randes der Folienkammerwände, nachdem das Gas zwischen den Folienkammerwänden radial von innen nach außen in Richtung auf den Vakuumanschluss oder die Vakuumanschlüsse strömt.

Durch beide Varianten wird ein gleichmäßig über den Umfang verteilter Gasstrom in Radialrichtung auf den Vakuumanschluss bewirkt. Hierzu kann insbesondere der Abstand zwischen den einander gegenüberliegenden, an das Folienkammervolumen angrenzenden Rahmen-Innenflächen d₂ größer sein als der Abstand d₁ zwischen den Folien-Innenflächen im evakuierten Zustand der Folienkammer, wenn kein Prüfling enthalten ist, oder in denjenigen Bereichen, in denen die Folien nicht durch einen enthaltenen Prüfling voneinander beabstandet werden. Dadurch wird beim Einströmen des Trägergases durch den Gaseinlass aufgrund des größeren Abstandes d₂ das Gas zunächst in Umfangsrichtung entlang des Rahmens verteilt, bevor das Gas zwischen den gegeneinander gesaugten Folienlagen radial von außen nach innen in Richtung auf den Vakuumanschluss strömt.

Bei einem Ausführungsbeispiel der Erfindung sind mehrere Gaseinlässe bzw. Vakuumanschlüsse entlang des Umfangs des Rahmens verteilt angeordnet. Insbesondere kann die Folienkammer radial symmetrisch ausgebildet sein, wobei der Vakuumanschluss, wie beansprucht, konzentrisch in Bezug auf den kreisringförmig umlaufenden Rahmen ausgebildet ist. Dadurch wird ein gleichmäßig verteilter Trägergasstrom entlang der Folienoberflächen in Radialrichtung von außen nach innen durch die Folienkammer ermöglicht.

Bei einer Folienkammer mit zwei gegeneinander gelegten Folienkammerwänden kann jede der beiden Wände mit einem mittig und konzentrisch in Bezug auf den Rahmen angeordneten Vakuumanschluss oder Gaseinlass versehen sein.

Der flexible Wandbereich weist vorteilhafterweise zumindest auf der dem Folienkammervolumen zugewandten Seite ein Material auf oder besteht aus diesem, welches kein Prüffluid und/oder kein Trägergas absorbiert. Bei diesem Material kann es sich z.B. um Silikon, Butyl-Kautschuk oder EPDM (Ethylen-Propylen-Dien-Monomer)-Kautschuk handeln.

An den Innenseiten der Folienkammerwände bzw. des flexiblen Wandbereichs kann eine zusätzliche Schicht eines Materials mit einer aufgrund seiner Struktur hohen Gasleitfähigkeit, z.B. als ein dünnes Netz oder Gitter, vorgesehen sein, um die Gasströmung vom äußeren Rahmen zum Vakuumanschluss oder vom inneren Gaseinlass zum äußeren Rahmen zwischen den aneinander gesaugten Wänden zu erleichtern. Alternativ oder ergänzend hierzu kann die dem Folienkammervolumen zugewandte Oberfläche mindestens einer der Wände bzw. des flexiblen Wandbereichs strukturiert, d.h. rau, uneben und/oder mit zahlreichen Vorsprüngen und/oder Vertiefungen versehen sein, so dass ein endlicher Gasleitwert gegeben ist.

Das erfindungsgemäße Verfahren ist durch die Merkmale jedes der Ansprüche 12 und 13 definiert. Demnach wird zunächst der Prüfling in die Folienkammer eingebracht und die Folienkammer anschließend geschlossen und mit einer an den Vakuumanschluss angeschossenen Vakuumpumpe evakuiert. Durch den Gaseinlass wird der Folienkammer im evakuierten Zustand bei reduziertem Folienkammervolumen ein Trägergas zugeführt. Im Falle eines undichten Prüflings tritt Prüffluid aus dem Inneren des Prüflings in die Folienkammer aus und vermischt sich dort mit dem Trägergas. Das entstehende Gasgemisch aus Trägergas und Prüffluid wird durch den Vakuumanschluss von der Vakuumpumpe abgesaugt und einem ebenfalls an den Vakuumanschluss angeschlossenen Gasdetektor zur Analyse zugeführt. Das Trägergas wird dabei dem Vakuumanschluss durch den Gaseinlass von außen nach innen (Variante 1) bzw. von innen nach außen (Variante 2) durch das Folienkammervolumen entlang des flexiblen Wandbereichs zugeführt, wodurch ein homogen verteilter Trägergasfluss entlang des flexiblen Wandbereichs resultiert.

Im Folgenden werden anhand der Figuren Ausführungsbeispiele der Erfindung näher erläutert. Es zeigen:
- Figur 1: eine schematische Darstellung eines ersten Ausführungsbeispiels,
- Figur 2: eine schematische Darstellung eines zweiten Ausführungsbeispiels und
- Figur 3: eine perspektivische Ansicht eines dritten Ausführungsbeispiels.

Die Folienkammer 10 der ersten beiden Ausführungsbeispiele weist einen kreisringförmig umlaufenden Rahmen 12 auf. Bei dem dritten Ausführungsbeispiel ist der Rahmen 12 ebenfalls ringförmig umlaufend, jedoch nicht kreisringförmig ausgebildet, sondern annähernd rechteckförmig mit abgerundeten Ecken. Andere ringförmige Geometrien des Rahmens 12 sind denkbar.

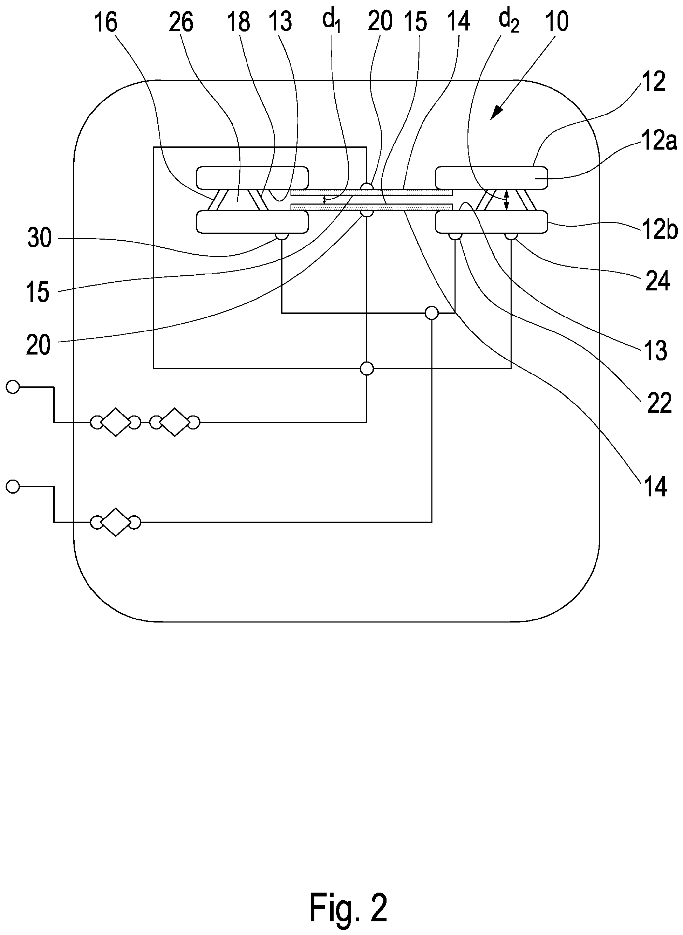

Der Rahmen 12 kann zweiteilig aus zwei zueinander komplementär ausgebildeten Rahmenteilen ausgebildet sein, wobei jedes Rahmenteil 12a, 12b jeweils eine Folienkammerwand 14 trägt. Die beiden Rahmenteile 12a, 12b sind jeweils durch zwei ebenfalls kreisringförmig ausgebildete Dichtungen 16, 18 gasdicht miteinander verbunden, wie in Figur 2 dargestellt.

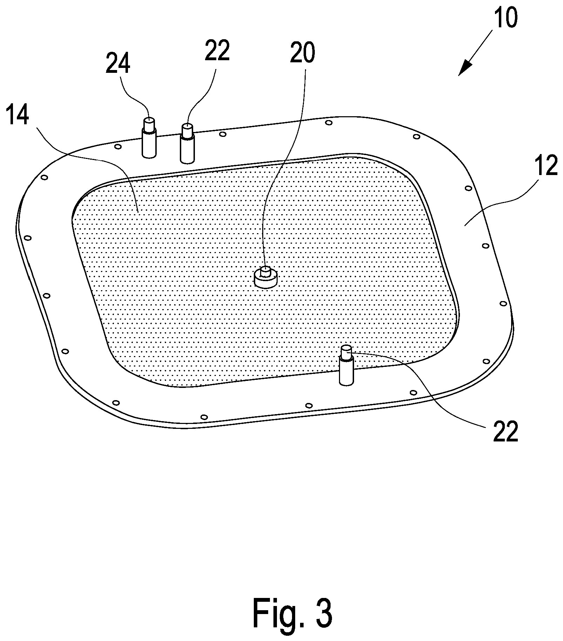

Jede der beiden Folien 14 ist in einem der beiden Rahmenteile 12a, 12b eingespannt und mindestens eine der Folien ist mit einem konzentrisch mittig in Bezug auf den umlaufenden Rahmen 12 angeordneten Vakuumanschluss 20 versehen. Der Rahmen 12 weist einen Gaseinlass 22 zur Zufuhr von Trägergas durch den Rahmen hindurch in das Innere der Folienkammer auf. Bei dem Ausführungsbeispiel nach Figur 1 ist ein Gaseinlass 22,30 vorgesehen. Bei den Ausführungsbeispielen der Figuren 2 und 3 sind jeweils zwei Gaseinlässe 22,30 für das Trägergas aufeinander gegenüberliegenden Seiten des Rahmens 12 ausgebildet. In Figur 1 sind an den Gaseinlass 22 eine Spülgasquelle und eine Trägergasquelle über Ventile V1, V2 angeschlossen. Der Rahmen weist zudem einen weiteren Gasanschluss 24 auf. Über den Gasanschluss 24 kann der zwischen den beiden Dichtungen 16, 18 ausgebildete Zwischenraum 26 mit einer an den Anschluss 24 angeschlossenen Vakuumpumpe 28 evakuiert werden. Die Vakuumpumpe 28 ist bei dem Ausführungsbeispiel nach Figur 1 über ein Ventil V3 mit dem Gasanschluss 24 verbunden.

Die beiden Rahmenteile 12a, 12b weisen jeweils an ihren an das Folienkammervolumen angrenzenden und einander zugewandten Seiten Rahmen-Innenflächen 13 auf. Die Rahmen-Innenflächen 13 der beiden Rahmenteile 12a, 12b sind in einem Abstand d₂ voneinander angeordnet. Dieser Abstand d₂ verbleibt im geschlossenen Zustand des Rahmens und im geschlossenen Zustand der Folienkammer und auch im evakuierten Zustand der Folienkammer.

Die beiden Folien 14 weisen auf ihrer dem Folienkammervolumen zugewandten Seite jeweils eine Folien-Innenfläche 15 auf. Im geschlossenen Zustand der Folienkammer, der in Figur 2 dargestellt ist, verbleibt ein Abstand d₁ zwischen den beiden Folien-Innenflächen 15 sowohl im evakuierten als auch im nicht evakuierten Zustand. Lediglich wenn zwischen den Folien 14 ein Prüfling enthalten ist, der von den Folien 14 begrenzt wird, können die Folien 14 nachgeben und im Bereich des Prüflings einen größeren Abstand aufweisen. Der Abstand d₂ ist größer als der Abstand d₁, so dass das Trägergas, welches durch die Gaseinlässe 22, 30 in das Folienkammervolumen einströmt, sich insbesondere im evakuierten Zustand der Vakuumpumpe aufgrund des größeren Abstandes d₂ zunächst in Umfangsrichtung zwischen den beiden Rahmenteilen 12a, 12b verteilt, bevor es aufgrund des geringeren Abstandes d₁ radial von außen nach innen aus allen Radialrichtungen in Richtung auf die mittigen Vakuumanschlüsse 20 strömt. Dadurch wird eine gleichmäßig über den Umfang verteilte Gasströmung des Trägergases von außen nach innen bewirkt.

An den Vakuumanschluss 20 ist eine Vakuumpumpe 32 angeschlossen, wie in Figur 1 dargestellt. Bei dem Ausführungsbeispiel nach Figur 1 ist die Vakuumpumpe 32 über Ventile V4, V6 mit dem Vakuumanschluss 20 verbunden. An den Gasleitungsweg 34, der die Vakuumpumpe 32 mit dem Vakuumanschluss 20 verbindet, ist ein Gasdetektor 36 angeschlossen, mit dem das evakuierte Gas aus der Folienkammer 10 auf das Vorhandensein von Prüffluid analysiert werden kann. Dabei ist der Gasdetektor 36 an einen Detektionsgasleitungsweg 38 angeschlossen, der zwei Enden aufweist, die jeweils über ein Ventil V7, V8 mit dem Gasleitungsweg 34 verbunden sind.

Dadurch ist es möglich, bei laufender Vakuumpumpe 32 mit geöffneten Ventilen V4 und V6 das Folienkammervolumen zu evakuieren, nachdem der Prüfling eingelegt wurde. Sobald ein ausreichendes Vakuum erreicht wurde, kann das Ventil V5 geschlossen werden und dem Folienkammervolumen wird über den Gaseinlass 22 bei geöffnetem Ventil V2 ein gedrosselter, kontinuierlicher Trägergasstrom zugeführt, der in dem Folienkammervolumen entlang der Innenseite der Folienkammerwände 14 radial von außen nach innen zu dem Vakuumanschluss 20 strömt. Das Ventil V6 wird geschlossen und die Ventile V7 und V8 geöffnet, so dass das aus dem Folienkammervolumen abgesaugte Gasgemisch über die geöffneten Ventile V4 und V7 dem Gasdetektor 36 zugeführt wird und über das geöffnete Ventil V8 schließlich in die Vakuumpumpe 32 und von dort in die äußere Atmosphäre gelangt.

Nach erfolgter Dichtheitsprüfung kann bei geschlossenem Ventil V2 und geöffnetem Ventil V1 ein Spülgasstrom dem Folienkammervolumen über den Gaseinlass 22 zugeführt werden, um dieses zu spülen. Die Spülgaszufuhr über das Ventil V1 ist dabei nicht oder zumindest weniger stark gedrosselt als die Trägergaszufuhr über das geöffnete Ventil V2.

Bei geöffnetem Ventil V3 und laufender Vakuumpumpe 28 kann der Zwischenraum des Rahmens, der auch als Kammerringspalt bezeichnet wird, zwischen den beiden Dichtungen 16, 18 evakuiert werden, um dadurch die beiden Rahmenteile 12a, 12b gegeneinander zu pressen und so die Folienkammer 12 zu verschließen.

Vorteilhat ist es, wenn der Trägergasstrom radialsymmetisch vom äußeren Kammerrahmen durch den Zwischenraum zwischen den Prüfkammerwänden nach Innen hin zum Vakuumanschluss in der Wandmitte bzw. Folienmitte strömt. Dadurch wird ermöglicht, dass Leckagegas, welches an einer Stelle des Prüflings austritt, mit gleicher Sensitivität und gleicher Geschwindigkeit (Reaktionszeit) nachgewiesen wird.

Die Gleichförmigkeit des Gasstroms wird im Wesentlichen durch den Leitwert längs des Folienzwischenraums und der Druckdifferenz zwischen Eintritt (am jeweiligen Übergang vom Kammerring zum Folienzwischenraum) und dem Vakuum-Anschluss in der Folienmitte beeinflusst.

Dazu sollte der Druck im Kammerringspalt homogen sein. Hierzu muss der Gasleitwert in Umfangsrichtung entlang des Kammerringspaltes von der Stelle des Trägergaseinlasses 22 bis zum vom Gaseinlass 22 am weitesten entfernten Punkt innerhalb des Kammerringspalts mindestens um den Faktor 10 größer sein als der Gasleitwert in Radialrichtung entlang des von den Folienkammerwänden gebildeten Zwischenraums (Folienkammervolumen) vom Kammerringspalt aus hin zur Mitte der jeweiligen Folienkammerwand.

Die Ausführungsbeispiele zu der zweiten Variante der Erfindung entsprechen den in den Fign. 1-3 dargestellten im Wesentlichen, bis auf den Unterschied, dass Vakuumanschlüsse und Gaseinlässe vertauscht sind.

## Patentansprüche

1. System zur Dichtheitsprüfung eines ein Prüffluid enthaltenden Prüflings, mit einer Folienkammer (10), einer Vakuumpumpe (32) und einem Gasdetektor (36), wobei die Folienkammer
mindestens einen mit der Vakuumpumpe (32) und dem Gasdetektor (36) verbundenen Vakuumanschluss (20),
mindestens einen ein Folienkammervolumen begrenzenden flexiblen Wandbereich (14) und
einen den flexiblen Wandbereich (14) außen umgebenden Rahmen (12) zum Verschließen des Folienkammervolumens aufweist,
wobei der mindestens eine Vakuumanschluss (20) in einem mittig in Bezug auf den Rahmen (12) angeordneten Bereich konzentrisch in Bezug auf den Rahmen (12) und radial außen von dem Rahmen (12) umgeben angeordnet ist, **dadurch gekennzeichnet,**
**dass** mindestens ein an eine Trägergasquelle angeschlossener Gaseinlass (22, 30) zum Zuführen eines Trägergases derart im Bereich des äußeren Rahmens angeordnet ist, dass das Trägergas durch den Gaseinlass durch das Folienkammervolumen entlang des flexiblen Wandbereichs (14) radial von außen nach innen zu dem Vakuumanschluss (20) strömt.

2. System zur Dichtheitsprüfung eines ein Prüffluid enthaltenden Prüflings, mit einer Folienkammer (10), einer Vakuumpumpe (32) und einem Gasdetektor (36), wobei die Folienkammer
mindestens einen mit der Vakuumpumpe (32) und dem Gasdetektor (36) verbundenen Vakuumanschluss (20),
mindestens einen ein Folienkammervolumen begrenzenden flexiblen Wandbereich (14) und
einen den flexiblen Wandbereich (14) außen umgebenden Rahmen (12) zum Verschließen des Folienkammervolumens
aufweist,
**dadurch gekennzeichnet,**
**dass** mindestens ein an eine Trägergasquelle angeschlossener Gaseinlass (22, 30) zum Zuführen eines Trägergases in einem mittig in Bezug auf den Rahmen (12) angeordneten Bereich konzentrisch in Bezug auf den Rahmen (12) und radial außen von dem Rahmen (12) umgeben angeordnet ist und
**dass** der mindestens eine Vakuumanschluss (20) derart im Bereich des äußeren Rahmens angeordnet ist, dass das Trägergas durch den Gaseinlass (22, 30) durch das Folienkammervolumen entlang des flexiblen Wandbereichs (14) radial von innen nach außen zu dem Vakuumanschluss (20) strömt.

3. System nach Anspruch 1 oder 2, **dadurch gekennzeichnet, dass** der Rahmen (12) ringförmig um den flexiblen Wandbereich (14) umlaufend ausgebildet ist und den flexiblen Wandbereich (14) umgrenzt.

4. System nach dem vorhergehenden Anspruch, **dadurch gekennzeichnet, dass** der Gasleitwert in dem Folienkammervolumen im Bereich des Rahmens (12) in Umfangsrichtung größer ist als der Gasleitwert in Radialrichtung von dem Gaseinlass (22, 30) zu dem Vakuumanschluss (20).

5. System nach einem der vorhergehenden Ansprüche, **dadurch gekennzeichnet, dass** die Wände der Folienkammer vollständig flexibel ausgebildet sind und in dem Rahmen eingespannt sind.

6. System nach einem der vorhergehenden Ansprüche, **dadurch gekennzeichnet, dass** der Gaseinlass (22, 30) oder der Vakuumanschluss (20) in dem Rahmen (12) oder an den Rahmen (12) angrenzend ausgebildet ist.

7. System nach einem der vorhergehenden Ansprüche, **dadurch gekennzeichnet, dass** der Rahmen (12) mehrere, vorzugsweise zwei Gaseinlässe (22, 30) oder Vakuumanschlüsse (20) aufweist.

8. System nach dem vorhergehenden Anspruch, **dadurch gekennzeichnet, dass** die Gaseinlässe (22, 30) oder Vakuumanschlüsse (20) gleichmäßig entlang des Umfangs des Rahmens (12) verteilt mit gleichmäßigen Abständen zueinander angeordnet sind.

9. System nach einem der vorhergehenden Ansprüche, **dadurch gekennzeichnet, dass** zwei Vakuumanschlüsse (20) oder Gaseinlässe (22, 30) auf einander gegenüberliegenden Seiten des Folienkammervolumens ausgebildet sind.

10. System nach einem der vorhergehenden Ansprüche, **dadurch gekennzeichnet, dass** der Rahmen (12) zwei einander gegenüberliegende, an das Folienkammervolumen angrenzende Rahmen-Innenflächen (13) aufweist und die beiden Folien (14) einander gegenüberliegende, an das Folienkammervolumen angrenzende Folien-Innenflächen (15) aufweisen, wobei der Abstand (d₂) zwischen den Rahmen-Innenflächen (13) größer ist als der Abstand zwischen den Folien-Innenflächen (15) im evakuierten Zustand der Folienkammer, wenn kein Prüfling in der Folienkammer enthalten ist.

11. System nach einem der vorhergehenden Ansprüche, **dadurch gekennzeichnet, dass** der flexible Wandbereich (14) ein Material aufweist, welches kein Prüffluid und/oder Trägergas absorbiert, nämlich Silikon, Butyl-Kautschuk oder EPDM.

12. Verfahren zur Dichtheitsprüfung eines ein Prüffluid enthaltenden Prüflings unter Verwendung einer Folienkammer (10), die
mindestens einen mit einer Vakuumpumpe (32) und einem Gasdetektor (36) verbindbaren Vakuumanschluss (20),
mindestens einen ein Folienkammervolumen begrenzenden flexiblen Wandbereich (14) und
einen den flexiblen Wandbereich (14) außen umgebenden Rahmen (12) zum Verschließen des Folienkammervolumens
aufweist,
wobei der mindestens eine Vakuumanschluss (20) in einem mittig in Bezug auf den Rahmen (12) angeordneten Bereich konzentrisch in Bezug auf den Rahmen (12) und radial außen von dem Rahmen (12) umgeben angeordnet ist **dadurch gekennzeichnet, dass** mindestens ein Gaseinlass (22, 30) zum Zuführen eines Trägergases derart im Bereich des äußeren Rahmens angeordnet ist, dass das Trägergas durch den Gaseinlass durch das Folienkammervolumen entlang des flexiblen Wandbereichs (14) radial von außen nach innen zu dem Vakuumanschluss (20) strömt,
mit den Schritten:
Einbringen des Prüflings in die Folienkammer (10),
Evakuieren der Folienkammer (10) mit einer an den Vakuumanschluss (20) angeschlossenen Vakuumpumpe,
Zuführen eines Trägergases in die Folienkammer (10) durch den Gaseinlass (22, 30),
Absaugen des Gasgemisches, das aus dem Trägergas und durch ein Leck im Prüfling ausgetretenem Prüffluid gebildet ist, durch den Vakuumanschluss (20) und Zuführen des abgesaugten Gasgemisches zu einem Gasdetektor,
Analysieren des Gasgemisches mit dem Gasdetektor (36) auf das Vorhandensein von Prüffluid,
wobei das Trägergas durch den Gaseinlass (22, 30) durch das Folienkammervolumen entlang des flexiblen Wandbereichs (14) radial von außen nach innen zu dem Vakuumanschluss (20) strömt.

13. Verfahren zur Dichtheitsprüfung eines ein Prüffluid enthaltenden Prüflings unter Verwendung einer Folienkammer (10), die
mindestens einen mit einer Vakuumpumpe (32) und einem Gasdetektor (36) verbindbaren Vakuumanschluss (20),
mindestens einen ein Folienkammervolumen begrenzenden flexiblen Wandbereich (14) und
einen den flexiblen Wandbereich (14) außen umgebenden Rahmen (12) zum Verschließen des Folienkammervolumens aufweist,
**dadurch gekennzeichnet, dass** mindestens ein Gaseinlass (22, 30) zum Zuführen eines Trägergases in einem mittig in Bezug auf den Rahmen (12) angeordneten Bereich konzentrisch in Bezug auf den Rahmen (12) und radial außen von dem Rahmen (12) umgeben angeordnet ist und
wobei der mindestens eine Vakuumanschluss (20) derart im Bereich des äußeren Rahmens angeordnet ist, dass das Trägergas durch den Gaseinlass (22, 30) durch das Folienkammervolumen entlang des flexiblen Wandbereichs (14) radial von innen nach außen zu dem Vakuumanschluss (20) strömt,
mit den Schritten:
Einbringen des Prüflings in die Folienkammer (10),
Evakuieren der Folienkammer (10) mit einer an den Vakuumanschluss (20) angeschlossenen Vakuumpumpe,
Zuführen eines Trägergases in die Folienkammer (10) durch den Gaseinlass (22, 30),
Absaugen des Gasgemisches, das aus dem Trägergas und durch ein Leck im Prüfling ausgetretenem Prüffluid gebildet ist, durch den Vakuumanschluss (20) und Zuführen des abgesaugten Gasgemisches zu einem Gasdetektor, Analysieren des Gasgemisches mit dem Gasdetektor (36) auf das Vorhandensein von Prüffluid,
2. wobei das Trägergas durch den Gaseinlass (22, 30) durch das Folienkammervolumen entlang des flexiblen Wandbereichs (14) radial von innen nach außen zu dem Vakuumanschluss (20) strömt.

14. Verfahren nach Anspruch 12 oder 13, **dadurch gekennzeichnet, dass** das Trägergas nach dem Einströmen durch den Gaseinlass (22, 30) in das Folienkammervolumen oder vor dem Ausströmen aus dem Folienkammervolumen durch den Vakuumanschluss (20) mit größerem Gasleitwert in Umfangsrichtung strömt als in Radialrichtung in Richtung auf den Vakuumanschluss (20) bzw. den Gaseinlass (22, 30).

## Claims

1. A system for leak testing a test specimen containing a test fluid, comprising a film chamber (10), a vacuum pump (32) and a gas detector (36), wherein the film chamber comprises
at least one vacuum port (20) connected to a vacuum pump (32) and to the gas detector (36),
at least one flexible wall portion (14) defining a film chamber volume and
a frame (12) surrounding the flexible wall portion (14) on the outside for closing the film chamber volume,
wherein the at least one vacuum port (20) is arranged concentrically with respect to the frame (12) in an area located centrally with respect to the frame (12) and is surrounded radially on the outside by the frame (12),
**characterized in that**
at least one gas inlet (22, 30) for the supply of a carrier gas is arranged in the area of the outer frame such that the carrier gas flows through the gas inlet through the film chamber volume along the flexible wall portion (14) radially from the outside inward to the vacuum port (20), said gas inlet being connected to a carrier gas source.

2. A system for leak testing a test specimen containing a test fluid, comprising a film chamber (10), a vacuum pump (32) and a gas detector (36), wherein the film chamber comprises
at least one vacuum port (20) connected to the vacuum pump (32) and to the gas detector (36),
at least one flexible wall portion (14) defining a film chamber volume and
a frame (12) surrounding the flexible wall portion (14) on the outside for closing the film chamber volume,
**characterized in that**
at least one gas inlet (22, 30) for the supply of a carrier gas is arranged concentrically with respect to the frame (12) in an area located centrally with respect to the frame (12) and is surrounded radially on the outside by the frame (12, the gas inlet being connected to a carrier gas source, and
the at least one vacuum port (20) is arranged in the area of the outer frame such that the carrier gas flows through the gas inlet (22, 30) through the film chamber volume along the flexible wall portion (14) radially from the inside outward to the vacuum port (20).

3. The system according to claim 1 or 2, **characterized in that** the frame (12) is designed to extend annularly around the flexible wall portion (14) and delimits the flexible wall portion (14).

4. The system according to the preceding claim, **characterized in that** the gas conductance value in the film chamber volume in the region of the frame (12) is greater in the circumferential direction than the gas conductance value in the radial direction from the gas inlet (22, 30) to the vacuum port (20).

5. The system according to one of the preceding claims, **characterized in that** the walls of the film chamber are designed to be entirely flexible and are clamped in the frame.

6. The system according to one of the preceding claims, **characterized in that** the gas inlet (22, 30) or the vacuum port (20) is formed in the frame (12) or adjacent to the frame (12).

7. The system according to one of the preceding claims, **characterized in that** the frame (12) comprises a plurality, preferably two gas inlets (22, 30) or vacuum ports (20).

8. The system according to the preceding claim, **characterized in that** the gas inlets (22, 30) or vacuum ports (20) are arranged distributed evenly along the circumference of the frame (12) at regular distances from each other.

9. The system according to one of the preceding claims, **characterized in that** two vacuum ports (20) or gas inlets (22, 30) are formed on opposing sides of the film chamber volume.

10. The system according to one of the preceding claims, **characterized in that** the frame (12) has two opposing inner frame surfaces (13) adjacent to the film chamber volume, and the two films (14) have opposing inner film surfaces (15) adjacent to the film chamber volume, the distance (d₂) between the inner frame surfaces (13) being greater than the distance between the inner film surfaces (15) in the evacuated state of the film chamber when no test specimen is contained in the film chamber.

11. The system according to one of the preceding claims, **characterized in that** the flexible wall portion (14) comprises a material that does not absorb test fluid and/or carrier gas, in particular silicone, butyl rubber or EPDM.

12. A method for leak testing a test specimen containing a test fluid using a film chamber (10), which film chamber comprises
at least one vacuum port (20) connectable to a vacuum pump (32) and to a gas detector (36),
at least one flexible wall portion (14) defining a film chamber volume and
a frame (12) surrounding the flexible wall portion (14) on the outside for closing the film chamber volume,
wherein the at least one vacuum port (20) is arranged concentrically with respect to the frame (12) in an area located centrally with respect to the frame (12) and is surrounded radially on the outside by the frame (12),
**characterized in that**
at least one gas inlet (22, 30) for the supply of a carrier gas is arranged in the area of the outer frame such that the carrier gas flows through the gas inlet through the film chamber volume along the flexible wall portion (14) radially from the outside inward to the vacuum port (20),
the method comprising the steps of:
introducing the test specimen into the film chamber (10),
evacuating the film chamber (10) by means of a vacuum pump connected to the vacuum port (20),
supplying a carrier gas to the film chamber (10) via the gas inlet (22, 30),
drawing the gas mixture, which is formed by the carrier gas and test fluid escaped through a leak in the test specimen, through the vacuum port (20) and supplying the drawn gas mixture to a gas detector,
analyzing the gas mixture for the presence of test fluid by means of the gas detector (36),
wherein the carrier gas flows through the gas inlet (22, 30) through the film chamber volume along the flexible wall portion (14) radially from the outside inward or from the inside outward to the vacuum port (20).

13. A method for leak testing a test specimen containing a test fluid using a film chamber (10), which film chamber comprises
at least one vacuum port (20) connectable to a vacuum pump (32) and to a gas detector (36),
at least one flexible wall portion (14) defining a film chamber volume and
a frame (12) surrounding the flexible wall portion (14) on the outside for closing the film chamber volume,
**characterized in that** at least one gas inlet (22, 30) for the supply of a carrier gas is arranged concentrically with respect to the frame (12) in an area located centrally with respect to the frame (12) and is surrounded radially on the outside by the frame (12), and
wherein the at least one vacuum port (20) is arranged in the area of the outer frame such that the carrier gas flows through the gas inlet through the film chamber volume along the flexible wall portion (14) radially from the outside inward to the vacuum port (20),
the method comprising the steps of:
introducing the test specimen into the film chamber (10),
evacuating the film chamber (10) by means of a vacuum pump connected to the vacuum port (20),
supplying a carrier gas to the film chamber (10) via the gas inlet (22, 30),
drawing the gas mixture, which is formed by the carrier gas and test fluid escaped through a leak in the test specimen, through the vacuum port (20) and supplying the drawn gas mixture to a gas detector,
analyzing the gas mixture for the presence of test fluid by means of the gas detector (36),
wherein the carrier gas flows through the gas inlet (22, 30) through the film chamber volume along the flexible wall portion (14) radially from the outside inward or from the inside outward to the vacuum port (20).

14. The method according to the preceding claim, **characterized in that** after flowing into the film chamber volume through the gas inlet (22, 30) or before flowing out of the film chamber volume through the vacuum port (20), the carrier gas flows with a greater gas conductance value in the circumferential direction than in the radial direction in the direction towards the vacuum port (20) or the gas inlet (22, 30).

## Revendications

1. Système de vérification d'étanchéité d'un objet à examiner contenant un fluide d'examen, avec une chambre à film (10), une pompe à vide (32) et un détecteur de gaz (36), la chambre à film comprenant
au moins un raccord de vide (20) raccordé à la pompe à vide (32) et au détecteur de gaz (36),
au moins une zone de paroi (14) flexible délimitant un volume de chambre à film et
un cadre (12) entourant la zone de paroi (14) flexible à l'extérieur et destiné à fermer le volume de chambre à film,
ledit au moins un raccord de vide (20) étant disposé, dans une zone centrale par rapport au cadre (12), de façon concentrique par rapport au cadre (12) et entouré radialement à l'extérieur par le cadre (12),
**caractérisé en ce qu'**une entrée de gaz (22, 30) raccordée à une source de gaz porteur et destinée à acheminer un gaz porteur, est disposée dans la zone du cadre extérieur de façon que le gaz porteur passe, par l'entrée de gaz par le volume de chambre à film le long de la zone de paroi (14) flexible, radialement de l'extérieur vers l'intérieur vers le raccord de vide (20).

2. Système de vérification d'étanchéité d'un objet à examiner contenant un fluide d'examen, avec une chambre à film (10), une pompe à vide (32) et un détecteur de gaz (36), la chambre à film comprenant
au moins un raccord de vide (20) raccordé à la pompe à vide (32) et au détecteur de gaz (36),
au moins une zone de paroi (14) flexible délimitant un volume de chambre à film et
un cadre (12) entourant la zone de paroi (14) flexible à l'extérieur et destiné à fermer le volume de chambre à film,
**caractérisé en ce**
**qu'**au moins qu'une entrée de gaz (22, 30) raccordée à une source de gaz porteur et destinée à acheminer un gaz porteur, est disposée dans une zone centrale par rapport au cadre (12), de façon concentrique par rapport au cadre (12) et entouré radialement à l'extérieur par le cadre (12) et en ce
**que** ledit au moins un raccord de vide (20) est disposé dans la zone du cadre extérieur de façon telle que le gaz porteur passe par l'entrée de gaz (22, 30) par le volume de chambre à film le long de la zone de paroi (14) flexible radialement de l'intérieur vers l'extérieur vers le raccord de vide (20).

3. Système selon la revendication 1 ou 2, **caractérisé en ce que** le cadre (12) est formé de façon à entourer la zone de paroi (14) flexible de manière annulaire et délimitant la zone de paroi (14) flexible.

4. Système selon la revendication précédente, **caractérisé en ce que** la conductance de gaz dans le volume de chambre à film dans la zone du cadre (12) est supérieure, dans la direction périphérique, à la conductance de gaz dans la direction radiale de l'entrée de gaz (22, 30) au raccord de vide (20).

5. Système selon l'une des revendications précédentes, **caractérisé en ce que** les parois de la chambre à film sont réalisées entièrement flexible et sont insérées dans le cadre.

6. Système selon l'une des revendications précédentes, **caractérisé en ce que** l'entrée de gaz (22, 30) ou le raccord de vide (20) est formée à l'intérieur du cadre (12) ou adjacent au cadre (12).

7. Système selon l'une des revendications précédentes, **caractérisé en ce que** le cadre (12) comprend plusieurs, de préférence deux, entrées de gaz (22, 30) ou raccords de vide (20).

8. Système selon la revendication précédente, **caractérisé en ce que** les entrées de gaz (22, 30) ou raccords de vide (20) sont réparties régulièrement le long de la périphérie du cadre (12) avec des intervalles réguliers entre eux.

9. Système selon l'une des revendications précédentes, **caractérisé en ce que** deux raccords de vide (20) ou entrées de gaz (22, 30) sont formés sur des côtés opposés du volume de chambre à film.

10. Système selon l'une des revendications précédentes, **caractérisé en ce que** le cadre (12) comprend deux surfaces intérieures opposées de cadre (13) adjacentes au volume de chambre à film et que les deux films (14) comprennent des surfaces intérieures de film (15) opposées et adjacentes au volume de chambre à film, la distance (d₂) entre les surfaces intérieures de cadre (13) étant supérieure à la distance entre les surfaces intérieures de cadre (15) en l'état évacué de la chambre à film, lorsqu'aucun objet à examiner est dans la chambre à film.

11. Système selon l'une des revendications précédentes, **caractérisé en ce que** la zone de paroi (14) flexible comprend un matériau qui n'absorbe pas de fluide d'examen et/ou gaz porteur, à savoir du silicone, du caoutchouc butyle ou de l'EPDM.

12. Procédé pour vérifier l'étanchéité d'un objet à examiner contenant un fluide d'examen tout en utilisant une chambre à film (10) qui comprend
au moins un raccord de vide (20) pouvant être raccordé à une pompe à vide (32) et à un détecteur de gaz (36),
au moins une zone de paroi (14) flexible délimitant un volume de chambre à film et
un cadre (12) entourant la zone de paroi (14) flexible à l'extérieur et destiné à fermer le volume de chambre à film,
ledit au moins un raccord de vide (20) étant disposé, dans une zone centrale par rapport au cadre (12), de façon concentrique par rapport au cadre (12) et entouré radialement à l'extérieur par le cadre (12),
**caractérisé en ce qu'**au moins une entrée de gaz (22, 30) destinée à acheminer un gaz porteur est disposée dans la zone du cadre extérieur de façon que le gaz porteur passe par l'entrée de gaz par le volume de chambre à film le long de la zone de paroi (14) flexible radialement de l'extérieur vers l'intérieur vers le raccord de vide (20), avec les étapes :
introduire l'objet à examiner dans la chambre à film (10),
faire le vide dans la chambre à film (10) avec une pompe à vide raccordée au raccord de vide (20),
acheminer un gaz porteur dans la chambre à film (10) par l'entrée de gaz (22, 30), aspirer le mélange de gaz qui est formé par le gaz porteur et le fluide d'examen sortie par une fuite dans l'objet à examiner,
analyser le mélange de gaz avec le détecteur de gaz (36) pour détecter une présence de fluide d'examen,
le gaz porteur passant par l'entrée de gaz (22, 30) par le volume de chambre à film le long de la zone de paroi (14) flexible radialement de l'extérieur vers l'intérieur vers le raccord de vide (20).

13. Procédé pour vérifier l'étanchéité d'un objet à examiner contenant un fluide d'examen tout en utilisant une chambre à film (10) qui comprend
au moins un raccord de vide (20) pouvant être raccordé à la pompe à vide (32) et au détecteur de gaz (36),
au moins une zone de paroi (14) flexible délimitant un volume de chambre à film et
un cadre (12) entourant la zone de paroi (14) flexible à l'extérieur et destiné à fermer le volume de chambre à film,
**caractérisé en ce**
**qu'**au moins une entrée de gaz (22, 30) raccordée à une source de gaz porteur et destinée à acheminer un gaz porteur, est disposée dans une zone centrale par rapport au cadre (12), de façon concentrique par rapport au cadre (12) et entouré radialement à l'extérieur par le cadre (12) et
ledit au moins un raccord de vide (20) étant disposé dans la zone du cadre extérieur de façon telle que le gaz porteur passe par l'entrée de gaz (22, 30) par le volume de chambre à film le long de la zone de paroi (14) flexible radialement de l'intérieur vers l'extérieur vers le raccord de vide (20)
avec les étapes :
introduire l'objet à examiner dans la chambre à film (10),
faire le vide dans la chambre à film (10) avec une pompe à vide raccordée au raccord de vide (20),
acheminer un gaz porteur dans la chambre à film (10) par l'entrée de gaz (22, 30),
aspirer le mélange de gaz qui est formé par le gaz porteur et le fluide d'examen sortie par une fuite dans l'objet à examiner, par le raccord de vide (20) et acheminer le mélange de gaz aspiré vers un détecteur de gaz,
analyser le mélange de gaz avec le détecteur de gaz (36) pour détecter une présence de fluide d'examen,
le gaz porteur passant par l'entrée de gaz (22, 30) par le volume de chambre à film le long de la zone de paroi (14) flexible radialement de l'intérieur vers l'extérieur vers le raccord de vide (20).

14. Procédé selon la revendication 12 ou 13, **caractérisé en ce que** le gaz porteur passe après l'entrée, par l'entrée de gaz (22, 30), dans le volume de chambre à film ou avant la sortie, par le raccord de vide (20), du volume de chambre à film avec une conductance de gaz plus grande dans la direction périphérique que dans la direction radiale en direction du raccord de vide (20) et respectivement de l'entrée de gaz (22, 30).
